# EUROPÄISCHE PATENTSCHRIFT

(11) **EP 0 617 098 B1**
(45) Veröffentlichungstag und Bekanntmachung des Hinweises auf die Patenterteilung: **21.03.2001**
(21) Anmeldenummer: 94100630.6
(22) Anmeldetag: 18.01.1994
(51) Int. Cl.: C09D 195/00, C08L 95/00

(54) **Antidröhnmassen**
Sound proofing masses
Masses anti-bruit

(30) Priorität: 24.03.1993 DE 4309506
(43) Veröffentlichungstag der Anmeldung: 28.09.1994
(73) Patentinhaber: CWW-GERKO Akustik GmbH & Co. KG, 67547 Worms (DE)
(72) Erfinder: Bildner, Karlheinz, Dipl.-Ing., D-63589 Linsengericht-Grossenhausen (DE); Hardt, Christian, Dipl.-Ing., D-65451 Kelsterbach (DE)
(74) Vertreter: Schlagwein, Udo, Dipl.-Ing.

(56) Entgegenhaltungen:
- DE-A- 3 209 151
- DE-A- 3 932 033
- US-A- 4 659 381
- US-A- 4 838 939

## Beschreibung

Die Erfindung betrifft spritzbare Massen auf der Basis von Bitumen.

Es ist bekannt, daß Bitumen-Polymer-, Bitumen-Wachs-oder Bitumen-Polymer-Wachs-Massen im Airless-Verfahren bei 130 °C auf PKW-Unterböden gespritzt werden. Die Massen bieten Korrosions- und Steinschlagschutz, sind aber nicht akustisch dämpfend wirksam.

Geräuschdämpfende Beschichtungen auf Bitumen-Basis sind entweder mittels kaltspritzbarer, lösemittelhaltiger Massen oder Emulsionen oder als Bitumen-Schmelzfolien hergestellt.

Bei lösemittelhaltigen Massen, bzw. bei Emulsionen muß nach dem Auftragen das Lösemittel, bzw. Wasser verdampfen, daß heißt, es ist ein zusätzlicher Produktionsschritt notwendig, der zeitraubende und technisch störend und, da die Lösemitteldämpfe nicht in die Umwelt emittiert werden dürfen, aufwendig ist.

Bei Bitumen-Schmelzfolien müssen aus den Massen die entsprechenden Folien hergestellt, in der anzuwendenden Form ausgestanzt und dann jeweils auf ihren Applikationsort paßgenau aufgebracht werden.

Zur Produktionsvereinfachung bei der Herstellung von technischen Geräten, insbesondere von Automobilen wird angestrebt, den Korrosions- und Unterbodenschutz und die Geräuschedämmung in einem Arbeitsgang unter Aufspritzen einer Masse zu erzielen.

Entsprechende, z. B. aus DE-A 25 03 557 oder DE-A 39 32 033 bekannte Massen erreichen jedoch nicht die gewünschten akustischen Dämpfungswerte, die zumindest denen der bislang eingesetzten Schmelzfolien entsprechen sollen.

Es ist daher Aufgabe der Erfindung, lösemittelfreie, spritzbare Massen bereitzustellen, die mit üblichen Spritzverfahren bei Temperaturen unter 140 °C verarbeitet werden können und die als Korrosions- und Steinschlagschutz dienen und die in einem weiten Temperaturbereich gut akustisch dämpfend wirken.

Die Lösung der Aufgabe erfolgt durch spritzbare Massen gemäß der Ansprüche 1 bis 5. Diese Massen finden bevorzugt Verwendung als geräuschdämpfende Beschichtung für Fahrzeuge und Haushaltsgeräte.

Es wurde gefunden, daß an sich bekannte lösemittelfreie, heißspritzbare Massen auf Basis von Bitumen, Polymeren und/oder Wachs heißspritzbar bleiben und gute geräuschdämpfende Eigenschaften erhalten, wenn sie Füllstoffe enthalten, deren Teilchengröße nicht größer als 200 µm ist und wenn sie als Füllstoffe neben ggf. weiteren Füllstoffen Aluminium- oder Zinkpulver sowie Graphit- oder Glimmerpulver oder Graphit- und Glimmerpulver enthalten.

Die Massen können weitere Füllstoffe enthalten, wie dies z. B. aus Schmelzfolienrezepturen bekannt ist. Beispiele für derartige Füllstoffe sind calcinierte Kaoline, Silikate, Kreide, Dolomit, Kieselsäure, aber auch hochdisperse Kieselsäure und Betonite.

Bevorzugt ist die Kombination aus Aluminium- oder Zinkpulver, Graphit und Kreide bzw. Aluminium- oder Zinkpulver und Glimmer sowie ggf. Kreide.

Die geringste Füllstoffmenge der Masse beträgt 18 Gew.-%. Je nach mittlerer Molekulargröße des oder der eingesetzten Bitumina, Polymere oder Wachse, das heißt, je nach der Aufnahmefähigkeit dieser bindenden Stoffe können die Massen bis zu 68 Gew.-% Füllstoffe enthalten. Dabei liegt die Menge des Aluminium- oder inkpulvers im Bereich von 1 bis 8 Gew.-%, die des Graphits im Bereich von 10 bis 50 Gew.-%.

Als Bitumen können alle handelsüblichen Typen ebenso wie Gemische verschiedener Typen eingesetzt werden. Bevorzugt sind die folgenden Bitumentypen: Destillationsbitumen B 180 - B 200 oder Blasbitumen 85/40. Die Bitumenmenge liegt im Bereich von 30 bis 50 Gew.-%. Die eingesetzten Bitumina werden mit 2 bis 22 Gew.-%, bezogen auf die Gesamtmasse, eines oder mehrerer Polymere und 0 bis 10 Gew.-%, bezogen auf die Gesamtmasse, eines oder mehrerer Wachse modifiziert.

Einsetzbare Polymere sind polymere Aliphaten, wie z. B. Polyethylen, -propylen oder -butylen, verträgliche Kautschuke, wie z. B. Acryl-, Nitril-, Styrol-Butadien, Styrol-Acryl-, Acryl-Butadien-Kautschuke sowie Klebeharze, wie z. B. aliphatische und aromatische Kohlenwasserstoffharze, Cumaron-Inden-Harze, Vinylharze, wie Polyvinylacetat oder Ethylen-Vinylacetat-Copolymer, insbesondere Polyvinylbutyral aber auch Naturharze, wie z. B. Balsam- oder Kolophoniumharz.

Als Wachse einsetzbar sind alle handelsüblichen Produkte mit einem Schmelzpunkt oberhalb 60 °C und zwar sowohl natürliche, pflanzliche oder tierische Wachse, Mineralwachse oder petrochemische Wachse als auch chemisch modifizierte, sog. Hartwachse und synthetische Wachse, insbesondere Polyalkylen-und Polyethylenglykolwachse.

Wachse und Polymere können mit handelsüblichen Weichmachern, insbesondere foggingarmen Prozeßölen (naphthenischen Ölen) vermischt werden. Somit ergibt sich folgende allgemeine Richtrezeptur der erfindungsgemäßen Massen:

| | |
|---|---|
| Bitumen | 30 bis 50 Gew.-% |
| Polymer(e) | 2 bis 22 Gew.-% |
| Wachs(e) | 0 bis 10 Gew.-% |
| Aluminium- oder Zinkpulver | 1 bis 8 Gew.-% |
| Graphit | 10 bis 50 Gew.-% |
| Glimmer | 0 bis 25 Gew.-% |
| weitere Füllstoffe | 0 bis 50 Gew.-% |

Die Einsatzprodukte und ihre jeweiligen Mengen werden so ausgesucht und abgestimmt, daß die Massen bei 140 °C eine Viskosität von 0,1 bis 0,5 Pa·s haben und bei dieser Temperatur mit üblichen Airless-Spritzgeräten gespritzt werden können.

Für die Anwender werden die Massen in isolierten Containern oder in Fässern geliefert und ggf. vor Gebrauch mit Faßschmelz-Anlagen verflüssigt.

Die Auftragung erfolgt durch Airless-Spritzen, bevorzugt mit Hilfe von Spritz-Robotern in gezielter Dicke und auf exakt vorgegebenen Bereichen.

Die abgekühlte Masse, aufgebracht auf einen Fahrzeugunterboden übernimmt die Funktionen des Korrosions- und Steinschlagschutzes und der Entdröhnung. Auf die Verwendung einer Entdröhnung im inneren Bodenbereich der entsprechenden Fahrzeuge kann verzichtet werden.

Die erfindungsgemäße Masse kann allerdings auch im Inneren von Fahrzeugen sowie bei Haushaltsgeräten eingesetzt werden.

### BEISPIEL 1

In eine aufgeschmolzene Mischung aus

| | |
|---|---|
| Bitumen B 180 | 40 Gew.-teile |
| Polybuten | 7 Gew.-teile |
| Balsamharz | 5 Gew.-teile |
| Polyethylenglykolwachs | 7 Gew.-teile |

werden mit einem Mischer

| | |
|---|---|
| Aluminiumpulver | 3 Gew.-teile |
| pyrogene Kieselsäure | 3 Gew.-teile |
| Graphit | 19,5 Gew.-teile |
| Kreide | 15,5 Gew.-teile |

eingearbeitet. Alle Füllstoffe haben eine mittlere Teilchengröße ≦ 30 µm.

Die Masse wird bei 130 °C auf 1 mm dicke Probebleche aufgespritzt.

Der Korrosionsschutz und Steinschlagschutz der Bleche ist einwandfrei.

Als Verlustfaktoren bei einer Frequenz von 200 Hz werden gemessen:

**Masse**

| Temperatur | Aufspritzmenge | Aufspritzmenge | Bitumen-Schmelzfolien (Vergleich) |
|---|---|---|---|
| [°C] | 3 kg/m² | 5 kg/m² | 3 kg/m² |
| + 40 | 0,09 | 0,11 | 0,06 |
| + 30 | 0,12 | 0,15 | 0,11 |
| + 20 | 0,13 | 0,20 | 0,13 |
| + 10 | 0,11 | 0,19 | 0,11 |
| ± 0 | 0,08 | 0,16 | 0,07 |
| - 10 | 0,05 | 0,12 | 0,05 |
| - 20 | 0,03 | 0,08 | 0,02 |

### BEISPIEL 2

In eine aufgeschmolzene Mischung aus

| | |
|---|---|
| Bitumen B 15 | 21 Gew.-teile |
| Bitumen B 180 | 27 Gew.-teile |
| Polyvinylacetat | 6,1 Gew.-teile |
| Balsamharz | 7,3 Gew.-teile |
| Polyethylenglykolwachs | 10,3 Gew.-teile |
| (Tropfst.: 102 °C) | |

werden mit einem Mischer

| | |
|---|---|
| Aluminiumpulver | 3,6 Gew.-teile |
| pyrogene Kieselsäure | 3,5 Gew.-teile |
| Glimmer, naß gemahlen | 16 Gew.-teile |
| Kreide | 5,2 Gew.-teile |

eingearbeitet. Alle Füllstoffe haben eine Teilchengröße ≦ 200 µm.

Die Masse wird bei 130 °C auf 1 mm dicke Probebleche aufgespritzt.

Der Korrosionsschutz und Steinschlagschutz der Bleche ist einwandfrei.

Als Verlustfaktoren bei einer Frequenz von 200 Hz werden gemessen:

**Masse**

| Temperatur | Aufspritzmenge | Aufspritzmenge |
|---|---|---|
| [°C] | 3 kg/m² | 5 kg/m |
| + 40 | 0,09 | 0,19 |
| + 30 | 0,12 | 0,24 |
| + 20 | 0,15 | 0,23 |
| + 10 | 0,15 | 0,19 |
| ± 0 | 0,11 | 0,14 |
| - 10 | 0,06 | 0,08 |
| - 20 | 0,03 | 0,06 |

## Patentansprüche

1. Bei Temperaturen unter 140°C spritzbare, lösemittelfreie Massen auf Basis von Bitumen, Polymeren und/oder Wachs, **dadurch gekennzeichnet**, daß sie Füllstoffe enthalten, deren Teilchengröße nicht größer ist als 200 µm und daß sie als Füllstoffe Aluminium- oder Zinkpulver sowie Graphit- oder Glimmerpulver oder Graphit- und Glimmerpulver neben ggf. weiteren Füllstoffen enthalten.

2. Spritzbare Massen nach Anspruch 1, **dadurch gekennzeichnet,** daß sie als Füllstoffe neben ggf. weiteren Füllstoffen Aluminium- oder Zinkpulver, Graphit und Kreide enthalten.

3. Spritzbare Massen nach Anspruch 1, **dadurch gekennzeichnet**, daß sie als Füllstoffe neben ggf. weiteren Füllstoffen Aluminium- oder Zinkpulver und Glimmer enthalten.

4. Spritzbare Massen nach einem der Ansprüche 1 bis 3, **dadurch gekennzeichnet**, daß sie ggf. neben anderen Füllstoffen, 1 bis 8 Gew.-% Aluminium-oder Zinkpulver und 10 bis 50 Gew.-% Graphit enthalten.

5. Spritzbare Massen nach einem der Ansprüche 1 bis 4, **gekennzeichnet** durch folgenden Aufbau
| | |
|---|---|
| Bitumen | 30 bis 50 Gew.-% |
| Polymer(e) | 2 bis 22 Gew.-% |
| Wachs(e) | 0 bis 10 Gew.-% |
| Aluminium- oder Zinkpulver | 1 bis 8 Gew.-% |
| Graphit | 0 bis 50 Gew.-% |
| Glimmer | 0 bis 25 Gew.-% |
| weitere Füllstoffe | 0 bis 50 Gew.-% |

6. Verwendung der Massen gemäß der Ansprüche 1 bis 5 als geräuschdämpfende Beschichtung für Fahrzeuge und Haushaltsgeräte.

## Claims

1. At temperatures under 140°C sprayable, solvent-free masses having, as a base, bitumen, polymers and/or wax, characterised in that they contain fillers, the particle size of which is not greater than 200 µm, and in that they contain, as fillers, aluminium powder or zinc powder and also graphite powder or mica powder or graphite powder and mica powder and, optionally, other fillers.

2. Sprayable masses according to claim 1, characterised in that they contain, as fillers, aluminium powder or zinc powder, graphite and chalk and, optionally, other fillers.

3. Sprayable masses according to claim 1, characterised in that they contain, as fillers, aluminium powder or zinc powder and mica and, optionally, other fillers.

4. Sprayable masses according to any one of claims 1 to 3,
characterised in that they contain 1 to 8 wt.% aluminium powder or zinc powder and 10 to 50 wt.% graphite and, optionally, other fillers.

5. Sprayable masses according to any one of claims 1 to 4,
characterised by the following composition:
| | |
|---|---|
| Bitumen | 30 to 50 wt.% |
| Polymer(s) | 2 to 22 wt.% |
| Wax(es) | 0 to 10 wt.% |
| Aluminium powder or zinc powder | 1 to 8 wt.% |
| Graphite | 0 to 50 wt.% |
| Mica | 0 to 25 wt.% |
| Other fillers | 0 to 50 wt.% |

6. The use of the masses according to claims 1 to 5 as a soundproofing coating for vehicles and household appliances.

## Revendications

1. Masses ou pâtes pulvérisables à des températures au-dessous de 140°C, exemptes de solvant, à base de bitume, polymère et/ou cire, caractérisées en ce qu'elles contiennent des matières de charge, dont la granulométrie n'est pas supérieure à 200 µm et ce qu'en tant que matières de charge, elles contiennent de la poudre d'aluminium ou de la poudre de zinc ainsi que de la poudre de graphite ou de la poudre de mica ou de la poudre de graphite et de la poudre de mica éventuellement en plus d'autres matières de charge.

2. Masses pulvérisables selon la revendication 1, caractérisées en ce qu'en tant que matières de charge en plus éventuellement d'autres matières de charge, elles contiennent de la poudre d'aluminium ou de la poudre de zinc, du graphite et de la craie.

3. Masses pulvérisables selon la revendication 1, caractérisées en ce qu'en tant que matières de charge en plus d'autres matières de charge, elles contiennent de la poudre d'aluminium ou de la poudre de zinc et du mica.

4. Masses pulvérisables selon l'une des revendications 1 à 3, caractérisées en ce qu'elles contiennent éventuellement en plus d'autres matières de charge, 1 à 8 % en poids de poudre d'aluminium ou de poudre de zinc, et 10 à 50 % en poids de graphite.

5. Masses pulvérisables selon l'une des revendications 1 à 4, caractérisées par la composition suivante
| | |
|---|---|
| Bitume | 30 à 50 % en poids |
| Polymère(s) | 2 à 22 % en poids |
| Cire(s) | 0 à 10 % en poids |
| Poudre d'aluminium ou de zinc | 1 à 8 % en poids |
| Graphite | 0 à 50 % en poids |
| Mica | 0 à 25 % en poids |
| Autres matières de charge | 0 à 50 % en poids |

6. Utilisation des masses selon les revendications 1 à 5, en tant que revêtement anti-bruit pour véhicules et appareils ménagers.
